# EUROPÄISCHE PATENTSCHRIFT

(11) **EP 0 444 172 B1**
(45) Veröffentlichungstag und Bekanntmachung des Hinweises auf die Patenterteilung: **16.06.1993**
(21) Anmeldenummer: 90913332.4
(22) Anmeldetag: 17.09.1990
(51) Int. Cl.: B28B 3/26, B29C 47/12, F28F 21/04

(54) **VERFAHREN ZUM HERSTELLEN EINES KÖRPERS AUS EXTRUDIERBARER MASSE, VORRICHTUNG ZUM DURCHFÜHREN DES VERFAHRENS, EXTRUSIONSMUNDSTÜCK FÜR EINE DERARTIGE VORRICHTUNG UND NACH DEM VERFAHREN HERGESTELLTER KÖRPER**
PROCESS FOR PRODUCING A BODY FROM EXTRUDABLE COMPOUNDS, DEVICE FOR IMPLEMENTING THE PROCESS, EXTRUSION NOZZLE FOR SUCH A DEVICE AND BODIES MADE BY THE PROCESS
PROCEDE ET DISPOSITIF DE FABRICATION DE CORPS EN MELANGES EXTRUDABLES, AJUTAGE POUR LEDIT DISPOSITIF ET CORPS PRODUITS SELON CE PROCEDE

(30) Priorität: 20.09.1989 CH 3427/89
(43) Veröffentlichungstag der Anmeldung: 04.09.1991
(73) Patentinhaber: GEBRÜDER SULZER AKTIENGESELLSCHAFT, CH-8401 Winterthur (CH)
(72) Erfinder: STRINGARO, Jean-Paul, CH-8180 Bülach (CH); PFEIFFER, Alex, CH-5643 Sins (CH)
(86) Internationale Anmeldenummer: CH9000220
(87) Internationale Veröffentlichungsnummer: WO9104141

(56) Entgegenhaltungen:
- WO-A-87/06181
- DE-A- 2 527 787
- US-A- 3 235 439
- US-A- 3 616 018
- US-A- 3 932 090

## Beschreibung

Die Erfindung bezieht sich auf ein Verfahren zum Herstellen eines Körpers aus extrudierbarem oder strangpressbarem Material und auf eine Extrusions- bzw. Strangpressanlage als Vorrichtung zum Durchführen des Verfahrens, auf ein Extrusionsmundstück und auf nach dem Verfahren hergestellte Körper.

Mit Extruder- bzw. Strangpressanlagen werden aus extrudierbarer bzw. strangpressbarer Masse wie z.B. Keramikmasse, Kunststoffmasse usw. Körper hergestellt. Die geformten Körper werden im Falle von Keramik noch gebrannt oder gesintert, um die endgültige Form und Festigkeit der Keramikmasse der Gegenstände zu erhalten. In der chemischen Verfahrenstechnik, insbesondere bei der Katalyse, spricht man bei extrudierten Körpern mit paralleler Kanalstruktur von Monolithen. Diese werden in Extruderanlagen hergestellt bei denen die Kanäle im Extrudermundstück ihre Lage zueinander nicht verändern.

Es ist mit Anlagen, die nach bekannten Verfahren arbeiten, auch möglich, Körper mit Kanalstrukturen herzustellen, die z.B. spiralförmig verdreht sind, wobei die relative Lage der Kanäle zueinander aber gleich bleibt. Alle Kanäle sind aber immer mit den gleichen Kanälen benachbart, was die Vielfalt der Körperstrukturen beträchtlich einschränkt. Aus der DE-OS 25 27 787 sind auch wabenförmige Strangpressteile mit einer grossen Anzahl von engen, geschlossenen Durchgangskanälen bekannt, welche zum Teil auch nicht parallel verlaufen können. Auch hier kann jedoch kein Austausch zwischen den einzelnen geschlossenen Kanälen stattfinden. Für viele Anwendungen sind aber Körper mit sich kreuzenden und offenen Kanälen notwendig oder vorteilhaft, wo es darum geht, das zu leitende Medium, z.B. ein Gas, eine Flüssigkeit, eine fliessfähige Festmasse oder ein Gemisch möglichst gut zu vermischen oder zu homogenisieren und gleichzeitig vom Innern des Körpers nach aussen zu führen. Dies z.B. zum Erwärmen oder Kühlen des fliessenden Mediums an den Aussenwänden einer Kolonne und vor allem zum optimalen, gleichmässigen und vollständigen Ablauf der gewünschten Reaktionen, Stoffaustausch- und Zustandsänderungen in chemischen Reaktionskolonnen, Mischern und Katalysatorsystemen. Dabei ist es notwendig, den ganzen Inhalt aller Kanäle über den ganzen Querschnitt eines Körpers vollständig und gleichmässig immer wieder neu zu vermischen. Dies ist mit geschlossenen Kanälen beliebiger Form jedoch generell nicht möglich.

Solche Körperstrukturen mit sich kreuzenden, offenen Kanälen werden deshalb bisher durch nachträgliches Zusammenfügen mehrerer beispielsweise extudierter oder stanggepresster Teilkörper aus Keramik oder Kunststoff usw. hergestellt. Allein schon der Aufwand für den zusätzlichen Arbeitsgang des nachträglichen Verbindens und z.B. Klebens oder nochmaligen Sintern der Verbindungsstellen ist aufwendig oder teuer. Zudem können die Verbindungsstellen mechanische und/oder chemische Schwachstellen (Korrosion) sein.

Aufgabe der Erfindung ist es ein Extruder- bzw. Strangpressverfahren zu schaffen, nach dem auch Körper mit Kanalstrukturen mit sich kreuzenden, offenen Kanälen in einem Extrusions-/Strangpressgang herstellbar sind und bei dem kein nachträgliches Zusammenfügen und Verbinden der Schichten und Lagen der Struktur mit den Kanälen notwendig ist. Es ist auch Ziel der Erfindung, eine Anlage zur Durchführung der Verfahrens zu schaffen. Eine weitere Aufgabe der Erfindung besteht darin, ein Extrudermundstück zu schaffen, mit den nach den neuen Verfahren und mit der neuen Vorrichtung extrudierte bzw. stranggepresste Körper gefertigt werden können. Schliesslich soll das Verfahren neue Körper schaffen, die bisher in einem einzigen Extrusions- bzw. Strangpress-Arbeitsgang nicht herstellbar waren.

Erfindunggemäss ist das Verfahren durch die Merkmale von Anspruch 1 gekennzeichnet. Die Extrusionsvorrichtung ist durch die Merkmale von Anspruch 10 gekennzeichnet. Das neue Extrusionsmundstück weist die Merkmale von Anspruch 12 auf. Und schliesslich ist der neue Körper durch die Merkmale von Anspruch 17 gekennzeichnet. Die abhängigen Ansprüche beziehen sich auf besonders vorteilhafte Ausführungsformen und Weiterentwicklungen der Erfindung. Die besonderen Vorteile der erfinderischen Lösung liegen darin, dass sich in einem einzigen Arbeitsgang mit dem neuen Verfahren und mit nach diesem arbeitenden Vorrichtungen, mittels mindestens dreier, ohne Zwischenraum aneinander anschliessender, gegeneinander beweglicher Mundstücksegmente und einen durchgehenden Linienzug bildender Extrusionskanäle, Körper mit gekreuzten und/oder ihre gegenseitige Lage ändernden offenen Kanälen oder ähnliche Strukturen extrudieren bzw. Strangpressen lassen, was u.a. zeitliche und kostenmässige, wirtschaftliche Einsparungen bringt. Diese Vorteile bestehen auch gegenüber bekannten Verfahren mit sich verflüchtigenden oder herauslösbaren Formen.

Die Bewegung der Segmente des Extrudermundstücks, des eigentlichen Werkzeugs, kann mit Vorteil in Abhängigkeit von der Extrusionsgeschwindigkeit gesteuert werden. Es wäre aber auch denkbar, die Segmente des Extrudermundstücks unabhängig von der Extrusionsgeschwindigkeit zu steuern und damit je nach Bedarf eine Vielzahl von Körperstrukturen aus Keramikmaterial oder Kunststoffen, mit Kanälen oder anderen Strukturmerkmalen auf einfache Weise mit grossen Kostenvorteilen zu erzeugen.

Die Erfindung wird nachstehend anhand von Beispielen der schematischen Zeichnungen näher erläutert. Es zeigen:
- Fig. 1: das Prinzipschema einer erfindungsgemässen Extruderanlage;
- Fig. 2: die Frontansicht eines neuen Extrudermundstücks für eine Extruderanlage nach der Erfindung;
- Fig. 2A: die Segmente des Extrudermundstücks von Fig. 2 mit Extrusionskanälen in einer anderen gegenseitigen Lage als in Fig. 2;
- Fig. 2B und 2C: weitere Beispiele von Extrusionskanälen der Segmente;
- Fig. 3: die Rückansicht des Extrudermundstücks von Fig. 2;
- Fig. 3A und 3B: Beispiele von Kurven des Geschwindigkeitsverlaufs möglicher Bewegungsabläufe von einzelnen und/oder Gruppen von Segmenten von Extrudermundstücken nach Fig. 2 und Fig. 3 und der Extrusionsgeschwindigkeit;
- Fig. 4: das Beispiel eines Körpers mit offenen gekreuzten Kanälen, der nach dem Verfahren gemäss Erfindung mit einem Extrudermundstück vom Typ der in Fig. 2 und Fig. 3 gezeigt ist, hergestellt werden kann;
- Fig. 5: einen Abschnitt eines Körpers mit offenen gekreuzten Kanälen.

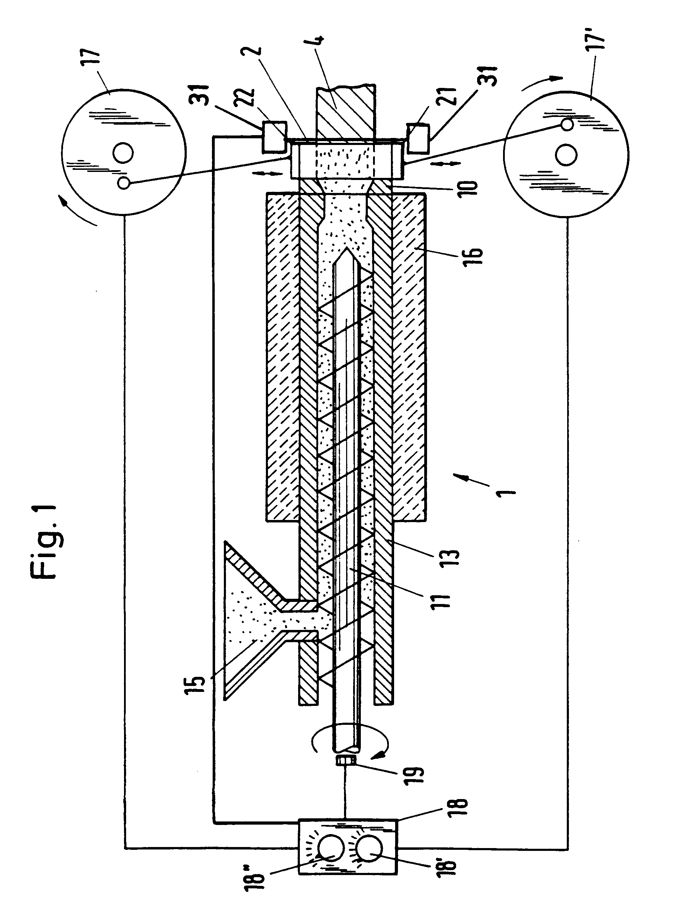

In der in Fig. 1 im Schnitt gezeigten Extruderanlage 1 mit einer Extruderschnecke 11 ist das Extrudermundstück 2 am Ausgang 10 des Extruders 13 angebracht. Die Segmente des Extrudermundstücks 2 werden von einem Antrieb 17, 17' hin und her bewegt. Diese Bewegung kann von der Drehgeschwindigkeit der Extruderschnecke 11 abhängig sein. Damit kann beispielsweise erreicht werden, dass der extrudierte Körper 4 unabhängig von der Extrusionsgeschwindigkeit immer die gleiche Form hat. Als extrudierbare Masse 15 ist beispielsweise eine Keramikmasse oder ein Kunststoff, wie etwa ein Duroplast, ein Thermoplast oder ein Elastomer geeignet. Für das Verarbeiten von thermisch beeinflussbaren Massen kann der Extruder 13 und/oder das Extrudermundstück 2 eine Heizung 16 aufweisen.

Die Segmente 21, 22 des Extrudermundstücks können beispielsweise, wie hier gezeigt, mit Exzenterantrieben 17, 17' hin und her bewegt werden. Eine zugeordnete Regelungs- und Steuerungseinheit 18, weist hier einen Drehzahlmesser 19 an der Extruderschnecke 11 auf, der die Drehgeschwindigkeit der Exzenterantriebe 17, 17' und damit die Hin- und Herbewegung in Abhängigkeit von der Drehgeschwindigkeit der Extruderschnecke 11 steuert. Mit den Einstellvorrichtungen 18', 18'' ist es möglich, die Bewegungen der Segmente des Extrudermundstücks 2 in weiten Grenzen individuell einzustellen und damit Körper 4 aus extrudierbarer Masse in verschiedenster Form zu extrudieren.

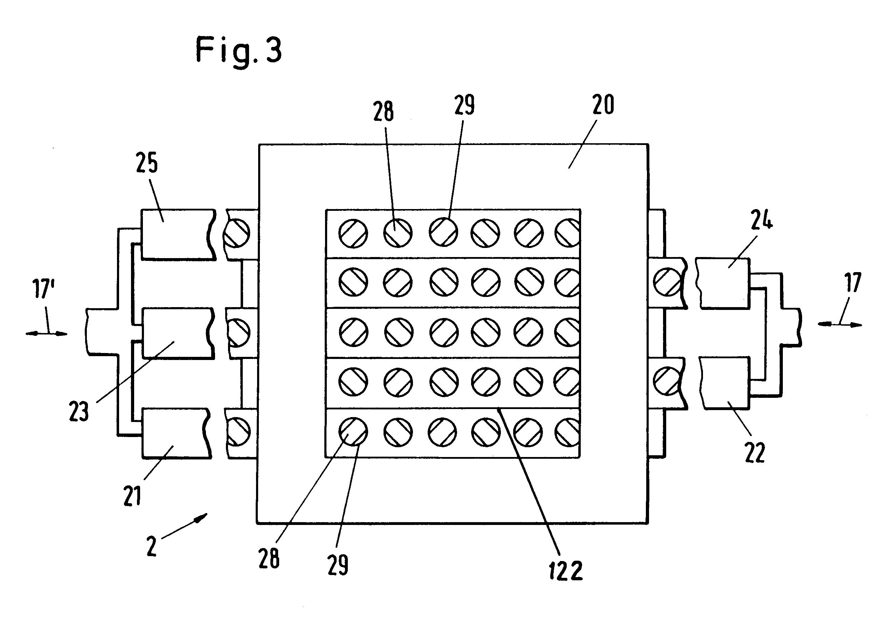

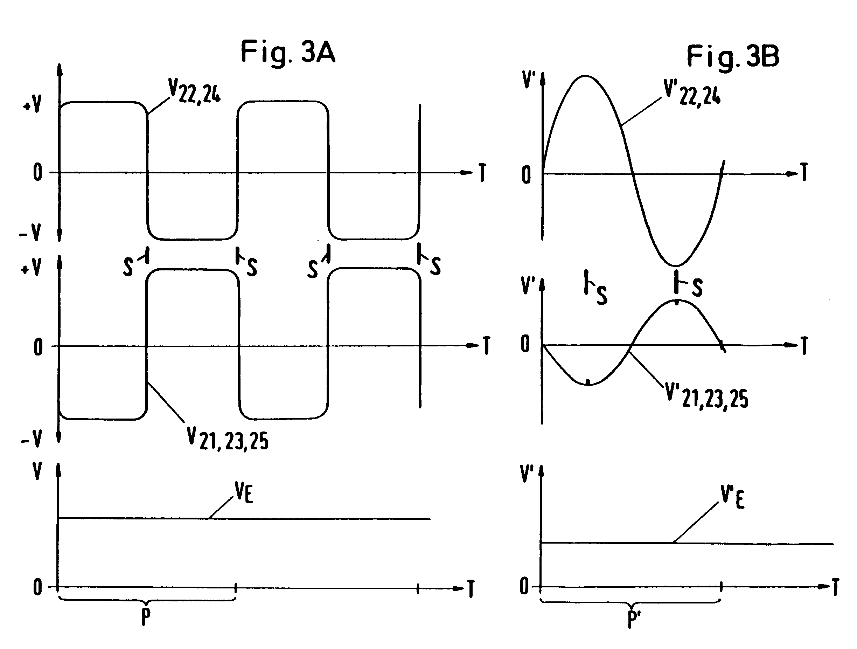

Eine unmittelbar am Ausgang des Mundstücks 2 angeordnete Schneidvorrichtung 31 dient dazu, den Körper 4 in Abschnitte gewünschter Art und Länge zu zerlegen. Mittels der Steuerungseinheit 18 kann die Schneidvorrichtung 31 insbesondere so gesteuert werden, dass bei jedem Richtungswechsel der Mundstückbewegung ein Schnitt S ausgeführt wird. Dadurch entstehen Körperabschnitte mit den Extrusionskanälen 28 der Segmente entsprechenden Körperkanälen 40 (Fig. 4), welche nur in eine Richtung verlaufen. Wie in den Figuren 3A, 3B und 5 eingezeichnet erfolgen solche Schnitte S bei Umkehr der Bewegungsrichtung der Segmente, d.h. in den Endlagen der periodischen Segmentbewegung.

Es wäre natürlich auch möglich, statt der beiden Exzenterantriebe 17, 17' die Segmente mit einem einzigen Antrieb zu bewegen und/oder andere Antriebsvorrichtungen wie Linearmotoren, Kurvenscheiben usw. zu verwenden. Die Bewegungen der Segmente brauchen auch keineswegs symmetrisch zu erfolgen. Der Antrieb der Segmente ist auch unabhängig von der Drehgeschwindigkeit der Extruderschnecke 11 denkbar, was die Vielfalt der herstellbaren Extrusionskörper 4 weiter erhöht.

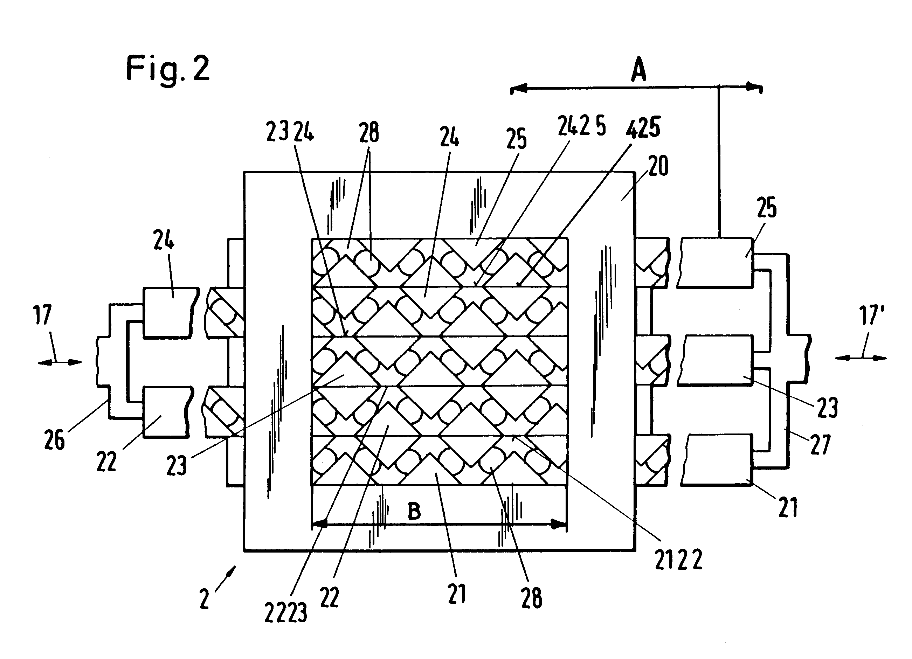

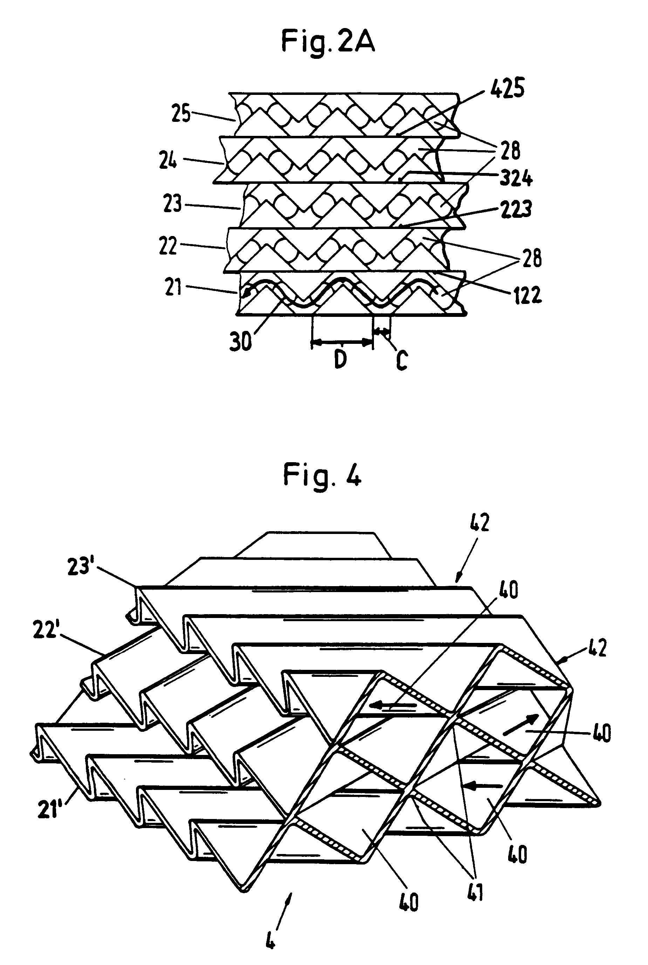

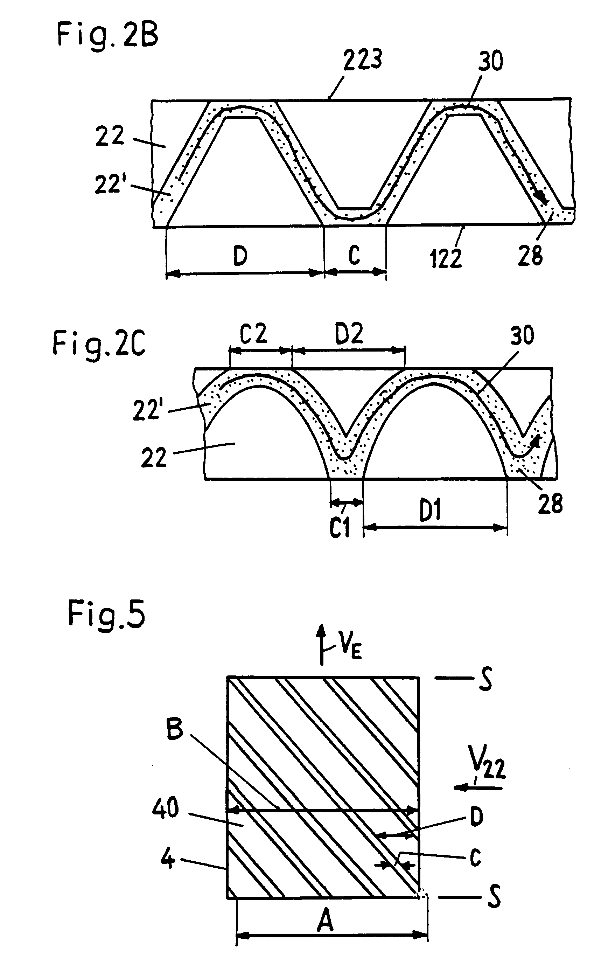

Das in Fig. 2 in Frontansicht gezeigte Extrudermundstück 2 weist fünf Segmente 21 bis 25 auf, die im Rahmen 20 gehalten und geführt sind. Die Segmente liegen in den Begrenzungsflächen 122, 223, 324, 425 ohne Zwischenraum aufeinander. Je die Gruppe der ersten 21, 23, 25 und der zweiten Segmente 22, 24 ist durch Verbindungsmittel 26 bzw. 27 verbunden, wodurch die Antriebe 17, 17' die Gruppen der Segmente (21, 23, 25) und (22, 24) gegeneinander bewegen können. Die Extrusionskanäle 28 sind hier so gestaltet, dass dabei ein Körper extrudiert wird, der jenem von Fig. 4 ähnlich sieht, falls die Bewegung der Segmente gleichförmig erfolgt wie in Fig. 3A. In der dargestellten gegenseitigen Lage der Extrusionskanäle 28 der Segmenten 21 bis 25 bilden die aneinandergrenzenden Extrusionskanäle die Verbindungsbereiche 2122, 2223, 2324, 2425.

Fig. 2A zeigt die Gruppen der Segmente (21, 23, 25) und (22, 24) von Fig. 2 mit den Extrusionskanälen 28 in einer anderen gegenseitigen Lage, ohne Verbindungsbereiche.

Zur Erzeugung von Körpern mit offenen, gekreuzten Kanälen 40 bilden vorteilhafte Formen der Extrusionskanäle 28 einen durchgehenden Linienzug 30, welcher zwischen den Begrenzungsflächen 122, 223, 324, 425 hin und her verläuft. Fig. 2B und 2C zeigen weitere mögliche Formen der Extrusionskanäle, welche z.B. stückweise gerade, gerundet und auch asymmetrisch verlaufen können. Stabile selbsttragende Körperlagen 21', 22', 23' mit 3-dimensionaler Struktur, welche sich nach dem Extrudieren von relativ weicher Masse nicht weiter deformieren sollten, können dabei durch schräge, nicht senkrecht zu den Begrenzungsflächen verlaufende Extrusionskanäle 28 erzeugt werden. Zweckmässigerweise werden die offenen Bereiche C der Extrusionskanäle in den Begrenzungsflächen aus Stabilitätsgründen nicht zu klein gewählt, jedoch kleiner als die geschlossenen Bereiche B, welche den offenen Kanälen 40 (Fig. 4) der Extrusionskörper entsprechen. Wie in Fig. 2C gezeigt, können diese Bereiche in einem Segment auch unterschiedlich sein, z.B. die Bereiche C1, D1 der unteren Begrenzungsfläche verschieden von den (C2, D2) der oberen Begrenzungsfläche.

Fig. 3 zeigt die Rückansicht, d.h. die dem Extruder zugekehrte Seite des Extrudermundstücks 2 von Fig. 2. Die extrudierbare Masse wird den Extrusionskanälen 28 über die Bohrungen 29 zugeführt.

In Fig. 3A und 3B sind Beispiele von Geschwindigkeits-Zeitdiagramme (V, T) bzw. (V', T) für die Segmentgruppen mit V_{21,23,25} bzw. V'_{21,23,25} für die Gruppe (21, 23, 25) und V_{22,24} bzw. V'_{22,24} für die Gruppe (22, 24) - mit dem jeweils zugehörigen Extrusions-Geschwindigkeitsdiagramm V_{E}(T) bzw. V'_{E}(T) dargestellt. Die Periode des Bewegungsablaufes ist mit P bzw. P' bezeichnet. In Fig. 3A werden beide Segmentgruppen gegenläufig und mit im wesentlichen konstanter Geschwindigkeit bewegt. Dadurch entstehen Körper wie in Fig. 4 dargestellt, wenn die Periodizität P so gewählt ist, dass die Länge des extrudierten Körpers 4 durch entsprechende Schnitte S der Schneidvorrichtung 31 einer halben Periode P entspricht, in welcher die Segmentgeschwindigkeiten V_{22,24} bzw. V_{21,23,25} konstant sind. Diese Einstellung ist besonders geeignet zur Herstellung von geordneten Packungen z.B. für statische Mischer. Fig. 3B zeigt einen ebenfalls gegenläufigen sinusförmigen Geschwindigkeitsverlauf beider Segmentgruppen jedoch mit unterschiedlicher Amplitude. Es könnte natürlich auch vorgesehen sein, die Extrusionsgeschwindigkeit und/oder die Periode und/oder da: Bewegungsmuster zu variieren. Für viele Anwendungen der Körper 4 ist es vorteilhaft, wenn die Struktur der Kanäle 40 (siehe Fig. 4) einen Winkel von beispielsweise 45° zur Extrusionsrichtung nicht überschreitet, um eine hohe Misch- und Homogenisierungswirkung bei relativ geringem Strömungswiderstand zu erreichen.

Beim in Fig. 5 gezeigten Abschnitt eines solchen Körpers entspricht überdies noch die Amplitude A der Segmentbewegung gerade der Breite B des Körpers bzw. des Mundstücks 2. Dann entstehen gekreuzte offene Kanäle 40, welche im wesentlichen geradlinig durch den ganzen Körper 4 hindurchführen.

Fig. 4 schliesslich zeigt einen extrudierten bzw. stranggepressten Körper 4 in der Form eines statischen Mischers mit offenen sich kreuzenden Kanälen 40, die aus dem Körperinnern nach aussen an eine begrenzende, offene Seitenfläche 42 des Körpers und umgekehrt verlaufen. Die Lagen 21', 22', 23' entsprechen dabei den Segmenten 21, 22, 23 des Mundstücks 2. Die Verbindungsstellen 41 die den Verbindungsstellen 2122, 2223, 2324, 2425 von Fig. 2 entsprechen, sind bei diesem Körper 4, wenn er nach dem Verfahren der Erfindung hergestellt ist, mechanisch und chemisch besonders widerstandsfähig vor allem im Vergleich zu bisherigen, nachträglich erzeugten Verbindungen zwischen den Lagen z.B. durch Sintern, Kleben oder dergleichen.

Mit der Gestaltung der Extrusionskanäle 28 im Extrudermundstück 2 und der Bewegung und Koppelung der Segmente 21, 22, 23, 24, 25 lassen sich Körper verschiedenster Art, die verschiedensten Formen von Kanälen 40 aufweisen, in einem einzigen Extrusions- bzw. Strangpress-Arbeitsgang erzeugen.

Beispielsweise für katalytische Reaktionen können so auf einfachst mögliche Art vorzügliche Katalysatorkörper mit guten Misch- und Reaktionseigenschaften, guter Wärmeableitung und ohne Schlupf hergestellt werden, indem etwa der erfindungsgemäss erzeugte Körper 4 selber aus einem katalytisch wirksamen, porösen Material hergestellt wird, oder indem der Körper 4 als Trägerstruktur durch Beschichtung mit einer katalytisch wirksamen Oberflächenschicht versehen wird, beispielsweise durch "wash coating". Vorteilhaft für den Einsatz als statische Mischer sind Körper 4, die mit einer Glasur als Schutzschicht versehen sind, einerseits gegen Abrasion oder Korrosion wie auch zur Glättung der Oberfläche zwecks Reduktion des Strömungswiderstands.

## Patentansprüche

1. Verfahren zum Herstellen eines Körpers (4) mit einer Extruderanlage (1), bei welchem die Extrudermasse mit einem Extruder durch ein aus mindestens drei Segmenten (21 bis 25) aufgebautes Mundstück (2) mit Extrusionskanälen (28) gepresst wird und bei welchem beim Extrudieren mindestens eines der Segmente (21) des Mundstücks in von der Extrusionsrichtung abweichender Richtung relativ zu einem anderen Segment (22) bewegt wird, dadurch gekennzeichnet, dass die Segmente (21 bis 25) ohne Zwischenraum aneinander anschliessen und in Begrenzungsflächen (122, 223, 324, 425) aneinandergrenzen und dass die Extrusionskanäle (28) der Segmente einen durchgehenden Linienzug (30) bilden, welcher zwischen den Begrenzungsflächen hin und her verläuft.

2. Verfahren nach Anspruch 1, dadurch gekennzeichnet, dass das mindestens eine bewegte Segment (21) des Mundstücks in einer Ebene (122), die wenigstens angenähert senkrecht zur Extrusionsrichtung steht, bewegt wird.

3. Verfahren nach Anspruch 1 oder 2, dadurch gekennzeichnet, dass benachbarte Segmente (21, 22) des Mundstücks wenigstens angenähert quer zur Extrusionsrichtung gegeneinander bewegt werden.

4. Verfahren nach einem der Ansprüche 1 bis 3, dadurch gekennzeichnet, dass jedes zweite Segment (21, 23, 25) des Mundstücks gleichgerichtet bewegt wird.

5. Verfahren nach einem der Ansprüche 1 bis 4, dadurch gekennzeichnet, dass die Segmente des Mundstücks symmetrisch zu einer Achse bzw. Ebene bewegt werden, die wenigstens angenähert senkrecht zur Extrusionsrichtung verläuft.

6. Verfahren nach einem der Ansprüche 1 bis 5, dadurch gekennzeichnet, dass mindestens ein Segment (21) des Mundstücks in Abhängigkeit von der Grösse der Extrusionsgeschwindigkeit (V_{E}) bewegt wird.

7. Verfahren nach einem der Ansprüche 1 bis 6, gekennzeichnet durch eine periodische Bewegung mit einer Hin- und Herbewegung, wie etwa eine Zickzack- oder eine Sinusbewegung, mindestens eines Segments (21) des Mundstücks.

8. Verfahren nach Anspruch 7, dadurch gekennzeichnet, dass die Amplitude A der periodischen Bewegung des Segments (21) im wesentlichen der Breite B des Mundstücks (2) und damit auch des erzeugten Extrusionskörpers (4) entspricht.

9. Verfahren nach Anspruch 7, dadurch gekennzeichnet, dass der entstehende Extrudierkörper jeweils in den Endlagen der periodischen Bewegung mittels einer Schneidvorrichtung (31) durchgeschnitten wird.

10. Vorrichtung zum Durchführen eines Verfahrens nach einem der Ansprüche 1 bis 9 mit einer Extrusionsvorrichtung (1) für die extrudierbare Masse, einem Mundstück (2), welches mindestens dreit ohne Zwischenraum aufeinanderliegende und in Begrenzungsflächen (122, 223, 324, 425) aneinandergrenzende Segmente (21 bis 25) mit Extrusionskanälen aufweist, wobei die Extrusionskanäle (28) einen durchgehenden Linienzug (30) bilden, welcher zwischen den Begrenzungsflächen hin und her verläuf, mit einer Antriebsvorrichtung (17, 17') mindestens für ein bewegbares Segment des Mundstücks und mit einer zugeordneten Steuerungseinheit (18).

11. Vorrichtung nach Anspruch 10, gekennzeichnet durch eine unmittelbar am Ausgang des Mundstücks (2) angeordnete Schneidvorrichtung (31), welche auch mit der Steuerungseinheit (18) verbunden ist.

12. Extrusionsmundstück für eine Vorrichtung nach Anspruch 10 und zum Durchführen eines Verfahrens nach einem der Ansprüche 1 bis 9 mit mindestens drei in Begrenzungsflächen (122, 223, 324, 425) aneinandergrenzenden, ebenen Segmenten (21 bis 25) mit Extrusionskanälen (28), welche relativ zueinander bewegbar sind, und wobei die Extrusionskanäle (28) der Segmente einen durchgehenden Linienzug (30) bilden, welcher zwischen den Begrenzungsflächen (122, 223) hin und her verläuft.

13. Extrusionsmundstück nach Anspruch 12, dadurch gekennzeichnet, dass die Extrusionskanäle (28) jedes Segments (22) an den Begrenzungsflächen (122, 223) abwechselnd offene Bereiche (C) und geschlossene Bereiche (D) bilden.

14. Extrusionsmundstück nach Anspruch 13, dadurch gekennzeichnet, dass die offenen Bereiche (C) kleiner sind als die geschlossenen Bereiche (D).

15. Extrusionsmundstück nach Anspruch 12, dadurch gekennzeichnet, dass die Extrusionskanäle (28) der Segmente nicht senkrecht zu den Begrenzungsflächen (122, 223) verlaufen.

16. Extrusionsmundstück nach Anspruch 12, dadurch gekennzeichnet, dass aufeinanderfolgend je die ersten und je die zweiten Segmente mit Verbindungsmitteln (26, 27) gekoppelt sind, derart, dass die ersten Segmente (21, 23, 25) und die zweiten Segmente (22, 24) je gemeinsam und relativ zueinander bewegbar sind.

17. Nach dem Verfahren nach einem der Ansprüche 1 bis 9 hergestellter Körper (4) aus extrudierbarem Material, bei welchem die den Segmenten (21 bis 25) entsprechenden Lagen des Körpers je eine zusammenhängende 3-dimensionale Struktur aufweisen, welche dem durchgehenden Linienzug (30) der Extrusionskanäle (28) entspricht.

18. Körper nach Anspruch 17, der, in Extrusionsrichtung betrachtet, von und zu einer begrenzenden, offenen Seitenfläche (42) des Körpers führende und sich kreuzende offene Kanäle (40) aufweist.

19. Körper nach einem der Ansprüche 17 bis 18, mit einer katalytisch wirksamen Oberflächenschicht.

20. Körper nach Anspruch 17 oder 18 mit einer Glasur als Oberflächenschicht.

## Claims

1. Method for producing a body (4) by means of an extrusion apparatus (1), in which the extrusion material is forced by an extruder through a die (2), which comprises extrusion channels (28) and is composed of at least three segments (21 to 25), and during extrusion at least one (21) of the segments of the die is moved relative to another segment (22) in a direction which is different from the extrusion direction, characterised in that the segments (21 to 25) are disposed next to one another without an interspace and adjoin one another at boundary surfaces (122, 223, 324, 425), and that the extrusion channels (28) of the segments form a continuous line (30) extending to-and-fro between the boundary surfaces.

2. Method according to claim 1, characterised in that at least one moving segment (21) of the die is moved in a plane (122) which extends approximately perpendicularly to the extrusion direction.

3. Method according to claim 1 or 2, characterised in that adjacent segments (21, 22) of the die are moved towards one another at least approximately transversely to the extrusion direction.

4. Method according to one of claims 1 to 3, characterised in that each second segment (21, 23, 25) of the die is moved in the same direction.

5. Method according to one of claims 1 to 4, characterised in that the segments of the die are moved symmetrically about an axis or plane which extends at least approximately perpendicularly to the extrusion direction.

6. Method according to one of claims 1 to 5, characterised in that at least one segment (21) of the die is moved in accordance with the value of the extrusion speed (V_{E}).

7. Method according to one of claims 1 to 6, characterised by a periodic movement with a to-and-fro movement like, for example, a zigzag or sinusoidal movement, at least of one segment (21) of the die.

8. Method according to claim 7, characterised in that the amplitude A of the periodic movement of the segment (21) corresponds essentially to the width B of the die (2) and thus that of the extruded body (4) which is produced.

9. Method according to claim 7, characterised in that the resulting extruded body is severed in each end position of the periodic movement by means of a cutting device (31).

10. Apparatus for carrying out a method according to one of claims 1 to 9, with an extrusion apparatus (1) for the extrudable material, a die (2), which comprises at least three segments (21 to 25), which are disposed one on top of the other without an interspace, adjoin one another at boundary surfaces (122, 223, 324; 425) and have extrusion channels, the extrusion channels (28) forming a continuous line extending to-and-fro between the boundary surfaces, with a drive device (17, 17'), at least for one mobile segment of the die, and with an associated control unit (18).

11. Apparatus according to claim 10, characterised by a cutting device (31) which is arranged directly at the exit of the die (2) and is also connected to the control unit (18).

12. Extrusion die for an apparatus according to claim 10 and for carrying out a method according to one of claims 1 to 9, with at least three plane segments (21 to 25), which adjoin one another at boundary surfaces (122, 223, 324, 425), have extrusion channels (28) and can be moved relative to one another, the extrusion channels (28) of the segments forming a continuous line (30) extending to-and-fro between the boundary surfaces (122, 223).

13. Extrusion die according to claim 12, characterised in that the extrusion channels (28) of each segment (22) alternately form open areas (C) and closed areas (D) at the boundary surfaces (122, 223).

14. Extrusion die according to claim 13, characterised in that the open areas (C) are smaller than the closed areas (D).

15. Extrusion die according to claim 12, characterised in that the extrusion channels (28) of the segments do not extend perpendicularly to the boundary surfaces (122, 223).

16. Extrusion die according to claim 12, characterised in that the first segments and the second segments are in each case coupled in turn to connecting means (26, 27) such that the first segments (21, 23, 25) and the second segments (22, 24) can in each case be moved together and relative to one another.

17. Body (4) of an extrudable material which is produced according to the method as in one of claims 1 to 9 and in which the layers of the body corresponding to the segments (21 to 25) each have a continuous three-dimensional structure corresponding to the continuous line (30) of the extrusion channels (28).

18. Body according to claim 17 which, considered in the extrusion direction, comprises open intersecting channels (40) leading from and to a delimiting, open lateral surface (42) of the body.

19. Body according to one of claims 17 to 18 with a catalytically active surface coating.

20. Body according to claim 17 or 18 with a glaze as the surface coating.

## Revendications

1. Procédé de réalisation d'un corps (4) au moyen d'une installation d'extrusion (1), suivant lequel la matière destinée à l'extrusion est refoulée par une extrudeuse dans une filière (2) constituée d'au moins trois segments (21 à 25) et comportant des canaux d'extrusion (28) et suivant lequel, lors de l'extrusion, au moins l'un des segments (21) de la filière est déplacé par rapport à un autre segment (22) dans une direction qui diffère de la direction d'extrusion, caractérisé en ce que les segments (21 à 25) se succèdent sans intervalle et sont contigus le long d'interfaces (122, 223, 324, 425) et en ce que les canaux d'extrusion (28) des segments forment un tracé continu (30) qui va et vient entre les interfaces.

2. Procédé selon la revendication 1, caractérisé en ce qu'au moins un segment déplacé (21) de la filière est déplacé dans un plan (122) qui est au moins à peu près perpendiculaire à la direction d'extrusion.

3. Procédé d'extrusion selon la revendication 1 ou 2, caractérisé en ce que des segments voisins (21, 22) de la filière exécutent un mouvement réciproque au moins à peu près perpendiculairement à la direction d'extrusion.

4. Procédé selon l'une des revendications 1 à 3, caractérisé en ce qu'un segment sur deux (21, 23, 25) de la filière est déplacé dans le même sens.

5. Procédé selon l'une des revendications 1 à 4, caractérisé en ce que les segments de la filière sont déplacés symétriquement par rapport à un axe ou un plan qui est au moins à peu près perpendiculaire à la direction d'extrusion.

6. Procédé selon l'une des revendications 1 à 5, caractérisé en ce qu'au moins un segment (21) de la filière est déplacé en fonction de la valeur de la vitesse d'extrusion (V_{E}).

7. Procédé selon l'une des revendications 1 à 6, caractérisé par un mouvement périodique alternatif, par exemple un mouvement en zigzag ou un mouvement sinusoïdal, d'au moins un segment (21) de la filière.

8. Procédé selon la revendication 7, caractérisé en ce que l'amplitude A du mouvement périodique du segment (21) correspond sensiblement à la largeur B de la filière (2) et donc aussi du corps (4) produit par extrusion.

9. Procédé selon la revendication 7, caractérisé en ce que le corps réalisé par extrusion est sectionné par un dispositif de coupe (31) à chacune des positions extrêmes du mouvement périodique.

10. Dispositif pour la mise en oeuvre d'un procédé selon l'une des revendications 1 à 9, comprenant un dispositif (1) d'extrusion d'une matière susceptible d'être extrudée, une filière (2) qui comprend au moins trois segments (21 à 25) comportant des canaux d'extrusion, appliqués les uns contre les autres sans intervalle et contigus le long d'interfaces (122, 223, 324, 425), les canaux d'extrusion (28) formant un tracé continu (30) qui va et vient entre les interfaces, ledit dispositif comprenant un dispositif de commande (17, 17') d'au moins un segment mobile de la filière et au moins un groupe correspondant de commande (18).

11. Dispositif selon la revendication 10, caractérisé par un dispositif de coupe (31) placé directement à la sortie de la filière (2) et également relié au groupe de commande (18).

12. Filière d'extrusion destinée à un dispositif selon la revendication 10 et pour la mise en oeuvre d'un procédé selon l'une des revendications 1 à 9, comprenant au moins trois segments plans (21 à 25) contigus le long d'interfaces (122, 223, 324, 425), comportant des canaux d'extrusion (28) et mobiles les uns par rapport aux autres, les canaux d'extrusion (28) des segments formant un tracé continu (30) qui va et vient entre les interfaces (122, 223).

13. Filière d'extrusion selon la revendication 12, caractérisée en ce que les canaux d'extrusion (28) de chaque segment (22) forment en alternance sur les interfaces (122, 223) des zones ouvertes (C) et des zones fermées (D).

14. Filière d'extrusion selon la revendication 13, caractérisée en ce que les zones ouvertes (C) sont plus petites que les zones fermées (D).

15. Filière d'extrusion selon la revendication 12, caractérisée en ce que les canaux d'extrusion (28) des segments ne sont pas perpendiculaires aux interfaces (122, 223).

16. Filière d'extrusion selon la revendication 12, caractérisée en ce que tous les premiers segments et tous les seconds serpents qui se succèdent sont accouplés par des organes de liaison (26, 27) de manière que tous les premiers segments (21, 23, 25) et tous les seconds segments (22, 24) soient mobiles ensemble les uns par rapport aux autres.

17. Corps (4) en matière susceptible d'être extrudée et réalisé d'après le procédé selon l'une des revendications 1 à 9, dans lequel chacune des couches du corps qui correspondent aux segments (21 à 25) présente une structure cohérente et tridimensionnelle qui correspond au tracé continu (30) des canaux d'extrusion (28).

18. Corps selon la revendication 17, qui, observé dans la direction d'extrusion, comporte des canaux ouverts (40) qui se croisent et qui vont d'une surface latérale extrême ouverte vers une surface latérale extrême ouverte (42) du corps.

19. Corps selon l'une des revendications 17 et 18, comportant une couche superficielle ayant une activité catalytique.

20. Corps selon la revendication 17 ou 18, comportant un vernissage formant une couche superficielle.
